# EUROPÄISCHE PATENTSCHRIFT

(11) **EP 1 235 998 B1**
(45) Veröffentlichungstag und Bekanntmachung des Hinweises auf die Patenterteilung: **07.05.2003**
(21) Anmeldenummer: 00969259.1
(22) Anmeldetag: 16.09.2000
(51) Int. Cl.: F16H 61/02, F16H 63/42

(54) **VORANKÜNDIGUNG EINER AUTOMATISCH AUSGEFÜHRTEN SCHALTUNG**
DEVICE FOR THE ADVANCE INDICATION OF AN AUTOMATICALLY EXECUTED SHIFT
SYSTEME POUR INDIQUER A L'AVANCE UN CHANGEMENT DE VITESSE AUTOMATIQUE IMMINENT

(30) Priorität: 29.09.1999 DE 19946560
(43) Veröffentlichungstag der Anmeldung: 04.09.2002
(73) Patentinhaber: ZF FRIEDRICHSHAFEN Aktiengesellschaft, 88038 Friedrichshafen (DE)
(72) Erfinder: NEUBECKER, Harald, 88046 Friedrichshafen (DE)
(86) Internationale Anmeldenummer: EP0009066
(87) Internationale Veröffentlichungsnummer: WO01023787

(56) Entgegenhaltungen:
- EP-A- 0 353 310
- DE-A- 3 832 970
- US-A- 2 711 525
- US-A- 4 267 545
- US-A- 5 893 894

## Beschreibung

Die Erfindung betrifft eine automatisch ausgeführte Schaltung in einem Fahrzeugwechselgetriebe nach dem Oberbegriff des Anspruchs 1, die aus der US-5 893 894 A bekannt ist.

Automatische oder automatisierte Schaltgetriebe von Fahrzeugen schalten üblicherweise nach vorgegebenen Schaltprogrammen, die verschiedene Parameter des jeweiligen Fahrzeugzustandes und Fahreranforderungen in die Berechnung eines angemessenen Übersetzungsverhältnisses des Getriebes einfließen lassen. Bevorstehende Fahrsituationen und Einflüsse aus der Verkehrssituation auf das Fahrzeug können die verschiedenen Parameter erzeugenden Sensoren nicht erfassen und damit einer Berechnung auch nicht zugrundelegen. Somit kann es zu Situationen kommen, in denen das Getriebe schaltet, die aber unpassend und für den Fahrer unangenehm sind. Dabei kann das Getriebe zu einem für den Fahrer unvorhersehbaren Zeitpunkt schalten oder es kann auch ein unvorhersehbar großer Gangwechsel durchgeführt werden, der der bestehenden Verkehrssituation oder Topographie nicht angemessen ist.

Aus der EP 0 170 465 B1 ist beispielgebend für automatisierte Getriebe bekannt, daß berechnende Getriebe-Schaltprogramme dem Fahrer den eingelegten Gang und mögliche Übersetzungsstufen anzeigen, die der Fahrer bei den derzeitig anliegenden Fahrzeugparametern sowohl zum Hochschalten als auch zum Zurückschalten einlegen könnte. Dem Fahrer bleibt überlassen, welchen Gang er wählt. Hierbei muß der Fahrer den Schaltvorgang nach wie vor selbst durchführen.

Der Erfindung liegt die Aufgabe zugrunde, bei einem automatisch oder automatisiert schaltenden Getriebe einen fahrsituationsbezogenen Wechsel des Übersetzungsverhältnisses im Getriebe zu unterstützen.

Die Aufgabe wird gelöst durch eine Vorrichtung mit den Merkmalen des Anspruchs 1. Ausgestaltungen sind Gegenstand von Unteransprüchen.

Bei einer Vorrichtung zum Schalten eines automatischen oder automatisierten Fahrzeugwechselgetriebe mit einer Getriebesteuerung und einer Anzeigevorrichtung für den Fahrer ist die Anzeigevorrichtung vorgesehen, um dem Fahrer die bevorstehende Schaltung voranzukündigen. Dadurch kann der Fahrer das Fahrzeug verkehrssituationsbezogen oder auch topographiebezogen richtig steuern. In einer bevorzugten Ausführungsform ist die Anzeigevorrichtung akustisch, optisch oder mechanisch ausgebildet. Eine Ausführungsform zeigt die Anzeigevorrichtung derart ausgestaltet, daß sie die Anzahl der Gangsprünge beim Wechsel des Übersetzungsverhältnisses anzeigt. In einer weiteren Ausgestaltung ist eine Vorrichtung vorgesehen, mit der der Fahrer nach der Vorankündigung der Schaltung einen Korrektureingriff in die Getriebesteuerung durchführen kann. Bei einer anderen vorteilhaften Ausgestaltung ist eine Vorrichtung vorgesehen, mit der der Fahrer nach der Vorankündigung der Schaltung eine Verhinderung der Schaltung veranlassen kann.

Durch die Vorbereitung des Fahrers auf die Schaltung, die durch die Anzeigevorrichtung erzielt wird, erwirbt der Fahrer ein subjektiv besseres Empfinden bezüglich des Schaltablaufs. Auf die gegebenenfalls entstehende Zugkraftunterbrechung kann er sich einstellen. Eine bevorstehende Verkehrssituation, wie eine die Durchfahrt versperrende Verkehrslichtzeichenanlage, das Ende eines Staus, ein Bahnübergang oder ein Fußgängerüberweg werden vom Fahrer mit seinen Sinnesorganen erkannt. Das Gleiche gilt für das Erkennen einer bevorstehenden Steigung nach einer längeren Fahrt auf ebener Strecke oder das Erreichen der Talsohle nach längerer Bergabfahrt, möglicherweise unter Einsatz zusätzlicher Bremseinrichtungen des Fahrzeugs. Ebenfalls kann die bevorstehende Situation eine Schaltung über mehrere Gangstufen nicht zulassen oder nicht sinnvoll erscheinen lassen. Der Fahrer kann entscheiden, ob eine dann vorangekündigte Schaltung noch sinnvoll ist oder nicht. Dementsprechend wird er sie zulassen, korrigieren oder verhindern.

Die Erfindung wird anhand einer Zeichnung näher erläutert.

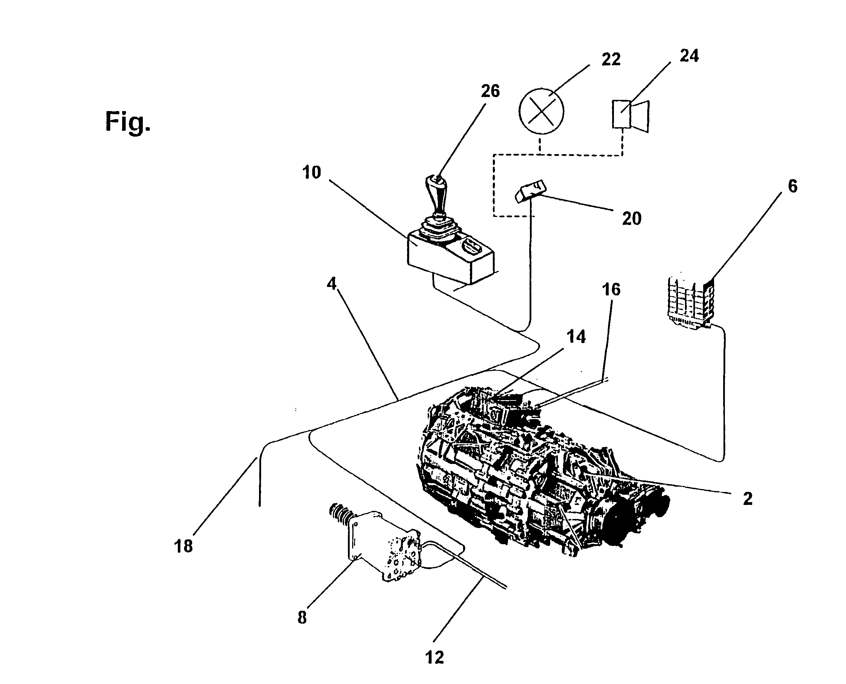

Die einzige Figur zeigt ein automatisiertes Getriebe 2, das über eine Steuerleitung 4, beispielsweise eine CAN-Bus-Leitung mit einer Getriebesteuerung 6, einem Kupplungssteller 8 und einem Gangschalthebel 10 verbunden ist. Über die Leitung 12 wird Druckluft einem Getriebesteller 14 zugeführt und über die Leitung 16 wird Druckluft dem Kupplungssteller 8 zugeführt. Die Steuerleitung 4 ist an einer Schnittstelle 18 mit weiteren hier nicht gezeigten Elementen des Fahrzeugs verbunden, wie beispielsweise Motorelektronik (EDC), Motorbremse, ABS, ASR oder Retarder. Ebenfalls ist ein Display 20 als eine Anzeigevorrichtung an die Steuerleitung 4 angeschlossen. Alternativ oder zusätzlich können optische 22 oder akustische 24 Anzeigevorrichtungen vorgesehen sein. An dem Gangschalthebel 10 ist ein Knopf 26 vorgesehen, mit dem der Fahrer die angekündigte Schaltung korrigieren oder verhindern kann.

### Bezugszeichen

- 2: Getriebe
- 4: Steuerleitung
- 6: Getriebesteuerung
- 8: Kupplungssteller
- 10: Gangschalthebel
- 12: Leitung
- 14: Getriebesteller
- 16: Leitung
- 18: Schnittstelle
- 20: Display
- 22: optische Anzeigevorrichtung
- 24: akustische Anzeigevorrichtung
- 26: Knopf

## Patentansprüche

1. Vorrichtung zum Schalten eines automatischen oder automatisierten Fahrzeugwechselgetriebes (2) mit einer Getriebesteuerung (6) und einer Anzeigevorrichtung (20, 22, 24) für den Fahrer, wobei die Anzeigevorrichtung (20) vorgesehen ist, um dem Fahrer die bevorstehende Schaltung voranzukündigen, **dadurch gekennzeichnet daß** eine Vorrichtung (26) vorgesehen ist, mit der der Fahrer nach der Vorankündigung der Schaltung durch die Anzeigevorrichtung (20) einen Korrektureingriff in die Getriebesteuerung (6) durchführen kann.

2. Vorrichtung zum Schalten eines automatischen oder automatisierten Fahrzeugwechselgetriebes (2) nach Anspruch 1, **dadurch gekennzeichnet, daß** der Fahrer mit der Vorrichtung (26) nach der Vorankündigung der Schaltung eine Verhinderung der Schaltung veranlassen kann.

3. Vorrichtung zum Schalten eines automatischen oder automatisierten Fahrzeugwechselgetriebes (2) nach Anspruch 1 oder 2, **dadurch gekennzeichnet, daß** die Anzeigevorrichtung (20, 22, 24) derart ausgestältet ist, daß sie die Anzahl der Gangsprünge beim Wechsel des Übersetzungsverhältnisses anzeigt.

4. Vorrichtung zum Schalten eines automatischen oder automatisierten Fahrzeugwechselgetriebes (2) nach einem der Ansprüche 1 bis 3, **dadurch gekennzeichnet, daß** die Anzeigevorrichtung (20, 22, 24) akustisch, optisch oder mechanisch ausgebildet ist.

## Claims

1. Device for shifting an automatic or automated motor vehicle variable-speed transmission (2) equipped with a transmission control unit (6) and an indicating instrument (20, 22, 24) for the driver, with the indicating instrument (20) being provided to inform the driver of the next gear change, **characterized in that** a device (26) is provided for the driver for corrective intervention with the transmission control unit (6) after being informed by the indicating instrument (20) of the next gear change.

2. Device for shifting an automatic or automated motor vehicle variable-speed transmission (2) according to claim 1, **characterized in that** the driver can use the device (26) to prevent a gear change indicated.

3. Device for stifling an automatic or automated motor vehicle variable-speed transmission (2) according to claim 1 or 2, **characterized in that** the indicating instrument (20) shows the number of gear steps when the gear ratio changes.

4. Device for shilling an automatic or automated motor vehicle variable-speed transmission (2) according to one of the claims 1 through 3, **characterized in that** the indicating instrument (20, 22, 24) is either of acoustical, optical or mechanical nature.

## Revendications

1. Dispositif de changement de vitesse d'une boîte automatique ou automatisée d'un véhicule automobile (2) doté d'un boîtier de commande électronique (6) et d'un dispositif d'affichage (20, 22, 24) pour le conducteur, sachant que le dispositif d'affichage (20) est prévu pour annoncer au conducteur le changement de vitesse imminent, **caractérisé en ce qu'**il est prévu un dispositif (26) permettant au conducteur d'effectuer une intervention de correction dans le boîtier de commande électronique (6) après l'annonce du changement de vitesse par le dispositif d'affichage (20).

2. Dispositif de changement de vitesse d'une boîte automatique ou automatisée d'un véhicule automobile (2) selon la revendication 1, **caractérisé en ce que**, après l'annonce du changement de vitesse, le conducteur peut intervenir dans le système au moyen du dispositif (26) pour inhiber le changement de vitesse.

3. Dispositif de changement de vitesse d'une boîte automatique ou automatisée d'un véhicule automobile (2) selon une des revendications 1 ou 2, **caractérisé en ce que** le dispositif d'affichage (20, 22, 24) est conçu de façon à ce que l'on puisse afficher le nombre de rapports lors du changement du rapport de démultiplication.

4. Dispositif de changement de vitesse d'une boîte automatique ou automatisée d'un véhicule automobile (2) selon une des revendications 1 à 3, **caractérisé en ce que** le dispositif d'affichage (20, 22, 24) est conçu de façon à pouvoir émettre des signaux acoustiques, optiques ou mécaniques.
